(19) Europäisches Patentamt
European Patent Office
Office européen des brevets

(11) **EP 2 355 393 B1**

(12) **EUROPEAN PATENT SPECIFICATION**

(45) Date of publication and mention
of the grant of the patent:
**11.12.2013 Bulletin 2013/50**

(51) Int Cl.:
***H04L 1/18*** (2006.01)

(21) Application number: **10003546.8**

(22) Date of filing: **31.03.2010**

(54) **Method and apparatus for determining an optimized number of transmissions for a data packet in a multicast transmission system**

Verfahren und Vorrichtung zur Bestimmung einer optimierten Anzahl von Übertragungen für ein Datenpaket in einem Multicast-Übertragungssystem

Procédé et appareil pour déterminer un nombre optimisé de transmissions pour un paquet de données dans un système de transmission multidiffusion

(84) Designated Contracting States:
**DE FR GB IT**

(30) Priority: **21.01.2010 EP 10000586**

(43) Date of publication of application:
**10.08.2011 Bulletin 2011/32**

(73) Proprietor: **Rohde & Schwarz GmbH & Co. KG**
**81671 München (DE)**

(72) Inventors:
• **Erhard, Mathias**
**81739 München (DE)**

• **Burchardt, Harald**
**Edinburgh, EH3 5QN (GB)**

(74) Representative: **Körfer, Thomas et al**
**Mitscherlich & Partner**
**Patent- und Rechtsanwälte**
**Postfach 33 06 09**
**80066 München (DE)**

(56) References cited:
**US-A- 5 659 702      US-A1- 2002 172 192**
**US-B1- 6 661 998**

**Description**

The invention concerns a method and an apparatus for determining an optimized upper-limited number of transmissions for a data packet in a multicast transmission system.

Multicast systems transferring a datastream from one transmitter to a limited number of receivers as disclosed in EP 1 722 506 A1 employ an Automatic Repeat Request (ARQ) protocol in the data link layer, which starts a retransmission of the data packet in case of an unsuccessful reception of that data packet in at least one of the receivers.

In the STANAG 4538 standard, a special ARQ protocol called Type-II Hybrid ARQ (H-ARQ) is introduced, which includes code and soft combining into the ARQ protocol for increasing the packet reception probability with each retransmission.

However, due to high fluctuations in RF channel conditions, there are often cases when one or many receivers are not able to receive one or more data packets successfully, i.e. the distance between the transmitter and the at least one receiver is too far or at least one receiver is interfered. To prevent infinite data packet delivery times, the number of retransmissions for an individual data packet is restricted to an upper limit.

From the document US 6 661 998 B1 there is known a method for determining an optimized upper-limited number (MS-desired) of transmissions for a data packet in a multicast transmission system. In this method, said upper-limited number is negotiated between a base station and a mobile station and determined according to certain conditions in the mobile station, for example the memory requirements of the mobile station.

The upper-limited number of transmissions has two negative effects:

- If the upper-limited number of retransmissions is set too low, not enough receivers will have the opportunity to successfully receive the packet.
- If the upper-limited number of retransmissions is set too high, too many retransmissions are allowed, and the packet delivery will become extremely time consuming.

Both of these scenarios will jeopardise the overall throughput performance of a multicast system.

Therefore the object of the invention is to develop a method and an apparatus for determining the optimized upper-limited number of transmissions resulting to an optimal throughput in a multicast system.

The object of the invention is solved by a method for determining an optimized upper-limited number of transmissions for a data packet in a multicast transmission with the features of claim 1 and an apparatus for determining an optimized upper-limited number of transmissions for a data packet in a multicast transmission with the features of claim 6.

The throughput in a multicast system is dependent on the average number of receivers receiving correctly a data packet within an upper-limited number of transmissions and on the average number of transmissions for correctly receiving a data packet by each receiver. Thus the average number of receivers receiving correctly a data packet within an upper-limited number of transmissions and the average number of transmissions for correctly receiving a data packet by each receiver is determined for each possible upper-limited number of transmissions. Calculating the quotient between the average number of receivers and the average number of transmissions for each possible upper-limited number of transmissions and determining the maximum quotient of the calculated quotients results in the optimized upper-limited number of transmissions.

Preferably the average number of receivers receiving correctly a data packet within an upper-limited number of transmissions and the average number of transmissions for correctly receiving a data packet by each receiver are each dependent on each probability determined respectively for correctly receiving a data packet in one of each receivers of the multicast transmission system after exactly one of all possible numbers of transmissions.

Preferably the probability is determined on the basis of a value characterizing the channel transmission quality, preferably the signal-to-noise-ratio and Doppler spread, and is measured at one of the receivers by use of Link Quality Analysis sounding and exchange methods at one of the possible transmissions. Another option for characterizing the channel transmission quality is the use of a prediction and coverage analysis program.

The inventive method and the inventive apparatus for determining a optimized upper-limited number of transmissions for a data packet in a multicast transmission system is described in detail in the following referring to the drawings. The figures of the drawings show:

Fig. 1    a flowchart of an embodiment of the inventive method for determining an optimized upper-limited number of transmissions for a data packet in a multicast transmission system,

Fig. 2    a block diagram of an embodiment of the inventive method for determining an optimized upper-limited number of transmissions for a data packet in a multicast transmission system and

Fig. 3    a diagram showing the throughput of the multicast system in dependence of possible upper-limited numbers of transmissions.

Firstly the mathematical basics of the invention are derived as far as being necessary for the understanding of the invention.

The throughput $T$ is dependent on the *size m* of the transmitted message, the transmission time t of the message and the number s of receivers according to equation (1).

$$T = \frac{m}{t} \cdot s \qquad\qquad (1)$$

The transmission time t of the message can be determined according to equation (2) on the basis of the number r of retransmissions, the number $M$ of data packets per message and the transmission time $t_0$ of a data packet, whereby the transmission time $t_0$ of a data packet comprises the time $t_{Data}$ for transmission of a data packet and the time $t_{Ack}$ for the acknowledgement of a data packet according to equation (3).

$$t = r \cdot M \cdot t_0 \qquad\qquad (2)$$

$$t_0 = t_{Data} + t_{Ack} \qquad\qquad (3)$$

Inserting the term for the transmission time t of the message according to equation (2) and the term for the transmission time $t_0$ of a data packet according to equation (3) in equation (1) results in the expression for the throughput $T$ according to equation (4) including the constant parameters $m, M$ and $t_0$ in a constant $b_0$ according to equation (4).

$$T = \frac{m}{t} \cdot s = \frac{m}{r \cdot M \cdot t_0} \cdot s = \frac{m}{M \cdot t_0} \cdot \frac{s}{r} = b_0 \cdot \frac{s}{r} \qquad\qquad (4)$$

$$b_0 = \frac{m}{M \cdot t_0} \qquad\qquad (5)$$

Therefore the throughput $T$ is proportional to the quotient $\dfrac{s}{r}$ of the *number s* of receivers and the number r of retransmissions.

$$T \propto \frac{s}{r} \qquad\qquad (6)$$

Both the number s of receivers and the number r of retransmissions are statistical factors depending on probabilities characterizing the transmission behaviour of the transmission channel from the transmitter to each receiver. Thus the average number $s_{nak}$ of receivers receiving the full message correctly within an upper-limited  number *nak* of transmissions and the average number $r_{nak}$ of transmissions for receiving correctly a data packet by each receiver are introduced replacing the number s of receivers and the number *r* of retransmissions in equation (6).

The average number $s_{nak}$ of receivers receiving the full message within an upper-limited number *nak* of transmissions is given by the sum of probabilities of each receiver receiving the entire message within the upper-limited number *nak* of transmissions according to equation (7). $p_{i,nak}$ is the probability of receiver i receiving the entire message within the upper-limited number *nak* of transmissions. *N* is the total number of receivers.

$$s_{nak} = \sum_{i=1}^{N} p_{i,nak} \qquad (7)$$

Furthermore, the probability $p_{i,nuk}$ of receiver *i receiving* the entire message within the upper-limited number *nak* of transmissions is given by the probability of receiver i receiving every data packet in the message within the upper-limited number *nak* of transmissions. The probability of receiver i receiving every data packet in the message within the upper-limited number *nak* of transmissions is calculated by *m* times multiplication of the probability $q_{i,nak}$ of receiver i receiving one data packet within the upper-limited number *nak* of transmissions according to equation (8). *M* is the amount of data packets sent per message.

$$p_{i,nak} = q_{i,nak}^{M} \qquad (8)$$

The probability $q_{i,nak}$ of receiver i receiving one data packet within the upper-limited number *nak* of transmissions is determined by 1 minus the probability of receiver i being not able to receive one data packet within the upper-limited number *nak* of transmissions according to equation (9). The probability of receiver i being not able to receive one data packet within the upper-limited number *nak* of transmissions can be expressed by the multiplied probabilities of receiver i being not able to receive one data packet in exact *j* transmissions, whereby each probability corresponds to one number *j* of transmissions between 1 and the upper-limited number *nak*. The probability of receiver i being not able to receive one data packet in exact *j* transmissions can be expressed by 1 minus the probability $v_{i,j}$ of receiver i receiving one data packet in exact *j* transmissions correctly, i.e. without any further retransmission.

$$q_{i,nak} = 1 - \prod_{j=1}^{nak} \left(1 - v_{i,j}\right) \qquad (9)$$

The complete expression for the average number $s_{nak}$ of receivers receiving the entire message correctly within an upper-limited number *nak* of transmissions is given by equation (10).

$$s_{nak} = \sum_{i=1}^{N} \left[ 1 - \prod_{j=1}^{nak} \left(1 - v_{i,j}\right) \right]^{M} \qquad (10)$$

Given a certain upper-limited number *nak,* the probability $P_{nak}$ that a data packet will need to be transmitted nak times is given by the probability that at least one receiver did not receive the data packet in *any j < nak* transmission, which is given by 1 minus the probability that all receivers correctly received the data packet in these *j < nak* transmissions.

$$p_{nak} = \prod_{j=1}^{nak-1} \left( 1 - \prod_{i=1}^{N} v_{i,j} \right) \qquad (11)$$

The probability $P_{k}$, that all receivers receive the data packet at exact k transmissions correctly, is given according to equation (12) by the probability $\left(\prod_{l=1}^{N} v_{l,k}\right)$ of all receivers receiving correctly the data packet within k transmissions

and the probability $\prod_{m=1}^{k-1}\left(1-\prod_{n=1}^{N} v_{n,m}\right)$, that all receivers did not receive correctly the data packet in one of the previous transmissions 1,...,k-1.

$$p_k = \left(\prod_{l=1}^{N} v_{l,k}\right) \cdot \prod_{m=1}^{k-1}\left(1-\prod_{n=1}^{N} v_{n,m}\right) \qquad (12)$$

To calculate the average number $r_{nak}$ of transmissions for receiving correctly a data packet by each receiver, the mean value of the discrete probability distribution given by $E[X]=\Sigma_i x_i.p(x_i)$ has to be determined. Thus the mean value of the distribution over the probabilities $p_k$ that all receivers receive the data packet at exact k transmissions correctly, for each $k=1,..,nak$ has to be determined according to equation (13).

$$
\begin{aligned}
r_{nak} &= \sum_{i}^{nak} i \cdot p_i \\
&= nak \cdot p_{nak} + \sum_{k=1}^{nak-1} k \cdot p_k \\
&= nak \cdot \prod_{i=1}^{nak-1}\left(1-\prod_{j=1}^{N} v_{j,i}\right) + \sum_{k=1}^{nak-1} k \cdot \left(\prod_{l=1}^{N} v_{l,k}\right) \cdot \prod_{m=1}^{k-1}\left(1-\prod_{n=1}^{N} v_{n,m}\right)
\end{aligned} \qquad (13)
$$

According to equation (6) the optimal throughput $T$ is directly proportional to the quotient $\dfrac{s}{r}$ between the number $s$ of receivers and the number $r$ of retransmissions. Taking into account the results for the average number $s_{nak}$ of receivers receiving the full message within an upper-limited number $nak$ of transmissions in equation (10) and the average number $r_{nak}$ of transmissions for receiving correctly a data packet by each receiver in equation (13), the optimal value $nak_{opt}$ for the upper-limited number $nak$ of transmissions can be determined according to equation (14) by calculating the quotient $\dfrac{s_{nak}}{r_{nak}}$ for each upper-limited number $nak$ and determining the maximal quotient of all calculated quotients $\dfrac{s_{nak}}{r_{nak}}$, whose upper-limited number $nak$ is the optimal value $nak_{opt}$ for the upper-limited number.

$$nak_{opt} = \underset{max}{argmax}\left\{\frac{s_{nak}}{r_{nak}}\right\} \qquad (14)$$

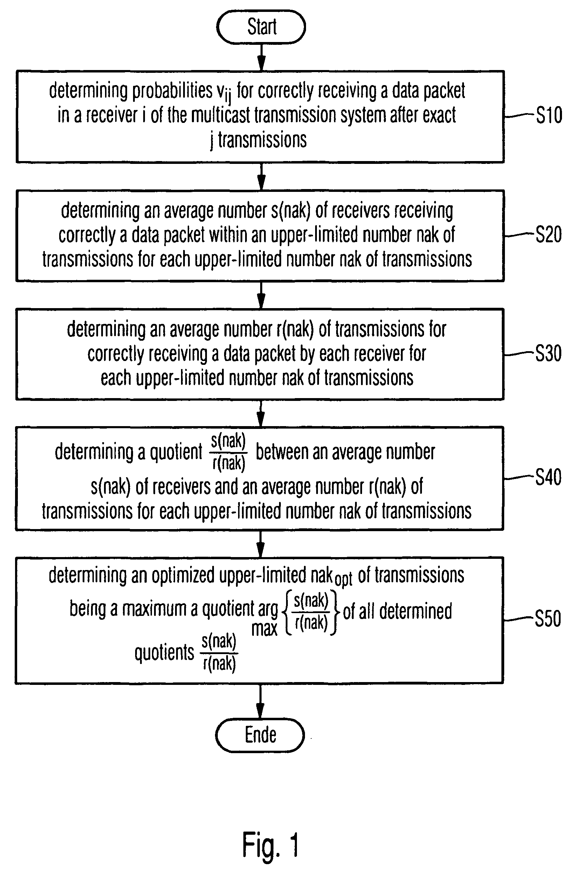

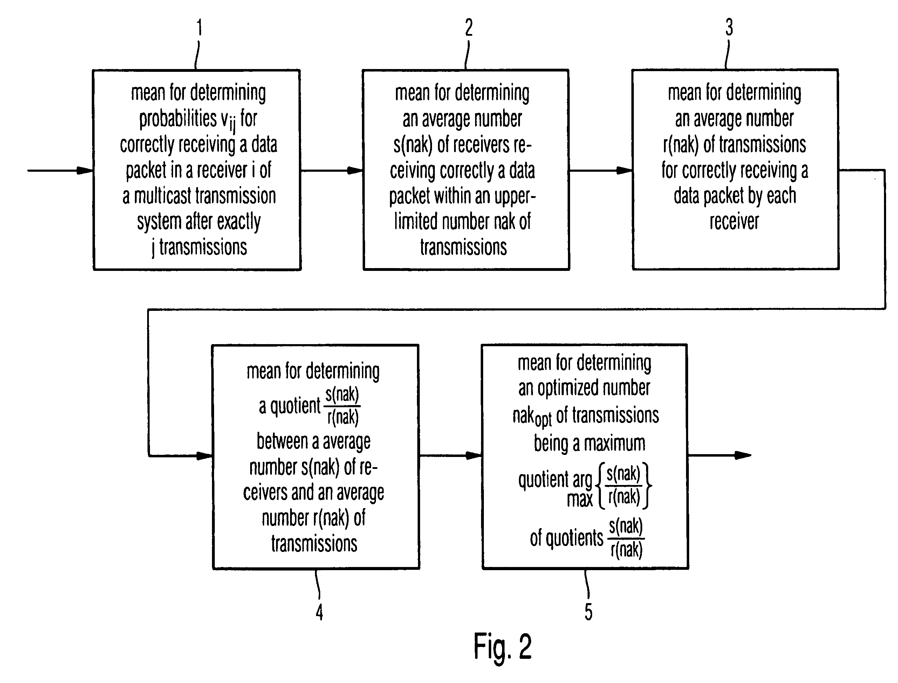

An embodiment of the inventive method for determining an optimized upper-limited number of transmissions for a data packet in a multicast transmission system is described on the basis of the flowchart in Fig. 1 in combination with an embodiment of the inventive apparatus for determining an optimized upper-limited number of transmissions for a data packet in a multicast transmission system shown in the block diagram of Fig. 2.

In the first step S10 of the inventive method the probabilities $v_{i,j}$ for correctly receiving a data packet of the message in a receiver i of the multicast transmission system after exact $j$ transmissions is determined for each receiver i and each number $j$ of transmissions in means 1 for determining probabilities $v_{i,j}$ for correctly receiving a data packet of the message in a receiver i of the multicast transmission system after exact $j$ transmissions.

The probabilities $v_{i,j}$ are determined on the basis of values characterizing the channel transmission quality, preferably the signal-to-noise-ratio and Doppler spread, between the transmitter and the receiver i and are measured at a receiver i in a series of in total $j$ transmissions.

The values characterizing the channel transmission quality are preferably determined by means of a Link Quality Analysis sounding or exchange method or by means of a prediction and coverage analysis program, for example VOACAP.

In the following step S20 of the inventive method an average number $s(nak)$ of receivers receiving correctly a data packet within an upper-limited number $nak$ of transmissions for each upper-limited number $nak$ of transmissions is determined according to equation (10) in means 2 for determining an average number $s(nak)$ of receivers receiving correctly a data packet within an upper-limited number $nak$ of transmissions.

In the following step S30 of the inventive method an average number $r(nak)$ of transmissions for correctly receiving a data packet by each receiver for each upper-limited number $nak$ of transmissions is determined according to equation (13) in means 3 for determining an average number $r(nak)$ of transmissions for correctly receiving a data packet by each receiver.

In the following step S40 of the inventive method a quotient $\dfrac{s(nak)}{r(nak)}$ between an average number $s(nak)$ of receivers and an average number $r(nak)$ of transmissions for each upper-limited number $nak$ of transmissions is determined in means 4 for determining a quotient $\dfrac{s(nak)}{r(nak)}$ between an average number $s(nak)$ of receivers and an average number $r(nak)$ of transmissions.

In the last step S50 of the inventive method an optimized upper-limited number $nak_{opt}$ of transmissions as the maximum quotient $\operatorname*{argmax}_{\max}\left\{\dfrac{s_{nak}}{r_{nak}}\right\}$ of all determined quotients $\dfrac{s(nak)}{r(nak)}$ is determined according to equation (14) in means 5 for determining an optimized upper-limited number $nak_{opt}$ of transmissions being the maximum quotient $\operatorname*{argmax}_{\max}\left\{\dfrac{s_{nak}}{r_{nak}}\right\}$ of all determined quotients $\dfrac{s(nak)}{r(nak)}$.

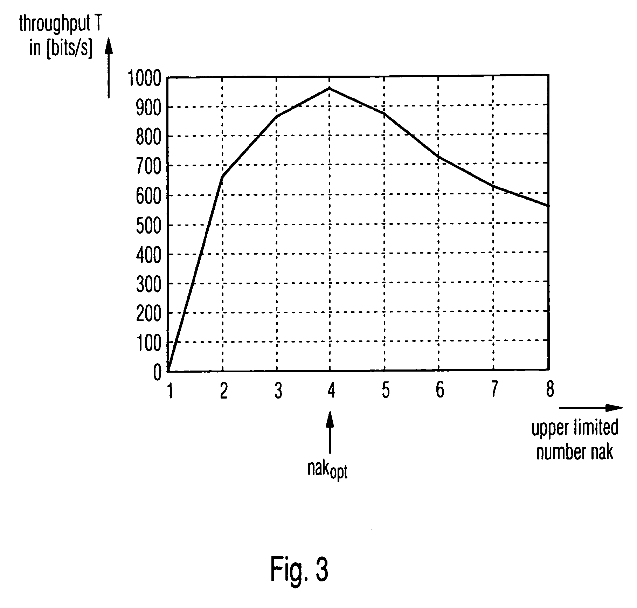

Such a determined maximum quotient $\operatorname*{argmax}_{\max}\left\{\dfrac{s_{nak}}{r_{nak}}\right\}$ of all determined quotients $\dfrac{s(nak)}{r(nak)}$ corresponds to the maximum throughput $T$ in the multicast transmission system with the related optimized upper-limited number $nak_{Opt}$ of transmissions according to Fig. 3.

The determined optimized upper-limited number $nak_{Opt}$ of transmissions is used in the transmission of the next message. After the transmission of the next message a repeated determination of the optimized upper-limited number $nak_{Opt}$ of transmissions is performed.

The invention is not limited to the discussed embodiments. All described and/or drawn features can be combined without any limitation for this invention.

**Claims**

**1.** Method for determining an optimized upper-limited number ($nak_{Opt}$) of transmissions for a data packet in a multicast transmission system comprising following steps:

    • determining an average number ($s(nak)$) of receivers receiving correctly said data packet within an upper-limited number (nak) of transmissions for each upper-limited number (nak) of transmissions,
  • determining an average number ($r(nak)$) of transmissions for correctly receiving said data packet by each receiver for each upper-limited number (nak) of transmissions,

  • determining a quotient ( $\dfrac{s(nak)}{r(nak)}$ ) of said average number ($s(nak)$) of receivers and said average number ($r(nak)$) of transmissions for each upper-limited number *(nak)* of transmissions and
  • determining said optimized upper-limited number ($nak_{Opt}$) of transmissions as being a maximum quotient

( $\underset{nak}{\arg}\left\{\dfrac{s(nak)}{r(nak)}\right\}$ ) of said quotients ( $\dfrac{s(nak)}{r(nak)}$ ) .

**2.** Method according to claim 1,
  **characterized in,**
  **that** said average number ($s(nak)$) of receivers is determined in dependence of probabilities $v_{i,j}$ determined for correctly receiving said data packet in a receiver $i$ of said multicast transmission system after an exact number $j$ of transmissions for each receiver $i$ and each number $j$ of transmissions.

**3.** Method according to claim 2,
  **characterized in**
  **that** said average number ($r(nak)$) of transmissions is determined in dependence of said probabilities $v_{i,j}$.

**4.** Method according to claims 2 or 3,
  **characterized in,**
  **that** said probability $v_{i,j}$ is determined on the basis of a value characterizing the channel transmission quality, preferably the signal-to-noise-ratio, and measured at a receiver $i$ at the time of the $j^{\text{th}}$ transmission.

**5.** Method according to claim 4,
  **characterized in,**
  **that** a value characterizing the channel transmission quality is determined by means of a Link Quality Analysis sounding or exchange method or by means of a prediction and coverage analysis program.

**6.** Apparatus for determining an optimized upper-limited number ($nak_{Opt}$) of transmissions for a data packet in a multicast transmission system comprising

  • means (2) for determining an average number ($s(nak)$) of receivers receiving correctly said data packet within an upper-limited number (nak) of transmissions for each upper-limited number (nak) of transmissions,
  • means (3) for determining an average number ($r(nak)$) of transmissions for correctly receiving said data packet by each receiver for each upper-limited number (nak) of transmissions,

  • means (4) for determining a quotient ( $\dfrac{s(nak)}{r(nak)}$ ) of said average number ($s(nak)$) of receivers and said average  number ($r(nak)$) of transmissions for each upper-limited number ($nak$) of transmissions and
  • means (5) for determining said optimized maximum number ($nak_{Opt}$) of transmissions as being a maximum

quotient ( $\underset{nak}{\arg}\left\{\dfrac{s(nak)}{r(nak)}\right\}$ ) of said quotients ( $\dfrac{s(nak)}{r(nak)}$ ) .

**7.** Apparatus according to claim 6 further comprising means (1) for determining probabilities $v_{i,j}$ for correctly receiving said data packet in a receiver $i$ of said multicast transmission system after exact a number $j$ transmissions.

**EP 2 355 393 B1**

**Patentansprüche**

**1.** Verfahren zur Bestimmung eines optimierten oberen Grenzwertes für eine Anzahl ($nak_{Opt}$) von Übertragungen für ein Datenpaket in einem Multicast-Übertragungssystem umfassend folgende Verfahrensschritte:

• Bestimmen einer durchschnittlichen Anzahl ($s(nak)$) von Empfängern, die das Datenpaket innerhalb eines oberen Grenzwertes für eine Anzahl (nak) von Übertragungen für jeden oberen Grenzwert einer Anzahl (nak) von Übertragungen korrekt empfängt,
• Bestimmen einer durchschnittlichen Anzahl ($r(nak)$) von Übertragungen für einen korrekten Empfang des Datenpakets durch jeden Empfänger für jeden oberen Grenzwert für eine Anzahl (nak) von Übertragungen,

• Bestimmen eines Quotienten ($\dfrac{s(nak)}{r(nak)}$) zwischen der durchschnittliche Anzahl ($s(nak)$) von Empfängern und der durchschnittlichen Anzahl ($r(nak)$) von Übertragungen für jeden oberen Grenzwert einer Anzahl ($nak$) von Übertragungen und
• Bestimmten des optimierten Grenzwertes einer Anzahl ($nak_{Opt}$) von Übertragungen als ein maximaler Quotient

$$( \arg_{nak}\left\{ \frac{s(nak)}{r(nak)} \right\} )\ \text{aus den Quotienten } ( \frac{s(nak)}{r(nak)} )\ .$$

**2.** Verfahren nach Patentanspruch 1,
**dadurch gekennzeichnet,**
**dass** die durchschnittliche Anzahl ($s(nak)$) von Empfängern in Abhängigkeit von Wahrscheinlichkeiten $v_{i,j}$ bestimmt wird, die für den korrekten Empfang des Datenpakets in einem Empfänger $i$ des Multicast-Übertragungssystems nach genau einer Anzahl $j$ von Übertragungen für jeden Empfänger $i$ und jede Anzahl $j$ von Übertragungen bestimmt werden.

**3.** Verfahren nach Patentanspruch 2,
**dadurch gekennzeichnet,**
**dass** die durchschnittliche Anzahl ($r(nak)$) von Übertragungen in Abhängigkeit der Wahrscheinlichkeiten $v_{i,j}$ bestimmt wird.

**4.** Verfahren nach Patentanspruch 2 oder 3,
**dadurch gekennzeichnet,**
**dass** die Wahrscheinlichkeit $v_{i,j}$ auf der Basis eines Wertes, der die Kanalübertragungsqualität charakterisiert, bevorzugt des Signal-Rausch-Abstands, bestimmt wird und in einem Empfänger $i$ zur Zeit der $j$-ten Übertragung gemessen wird.

**5.** Verfahren nach Patentanspruch 4,
**dadurch gekennzeichnet,**
**dass** ein Wert, der die Kanalübertragungsqualität charakterisiert, mittels einer Peil- und Vermittlungs-Methode mit Verbindungsqualitätsanalyse oder mittels eines Vorhersage-und-Reichweiten-Analyseprogramms bestimmt wird.

**6.** Vorrichtung zur Bestimmung eines optimierten oberen Grenzwertes für eine Anzahl ($nak_{Opt}$) von Übertragungen für ein Datenpaket in einem Multicast-Übertragungssystem umfassend

• Mittel (2) zur Bestimmung einer durchschnittlichen Anzahl ($s(nak)$) von Empfängern, die das Datenpaket innerhalb eines oberen Grenzwertes für eine Anzahl (nak) von Übertragungen für jeden oberen Grenzwert für eine Anzahl (nak) von Übertragungen korrekt empfangen,
• Mittel (3) zur Bestimmung einer durchschnittlichen Anzahl ($r(nak)$) von Übertragungen für den korrekten Empfang des Datenpakets durch jeden Empfänger für jeden oberen Grenzwert für eine Anzahl (nak) von Übertragungen,

• Mittel (4) zur Bestimmung eines Quotienten ($\dfrac{s(nak)}{r(nak)}$) zwischen der durchschnittlichen Anzahl ($s(nak)$) von Empfängern und der durchschnittlichen Anzahl ($r(nak)$) von Übertragungen für jeden oberen Grenzwert für

**8**

eine Anzahl (*nak*) von Übertragungen und

• Mittel (5) zur Bestimmung der optimierten maximalen Anzahl (*nak_Opt*) von Übertragungen als maximaler

$$\text{Quotient } \left(\arg_{nak}\left\{\frac{s(nak)}{r(nak)}\right\}\right) \text{ der Quotienten } \left(\frac{s(nak)}{r(nak)}\right).$$

**7.** Vorrichtung nach Patentanspruch 6 umfassend weiterhin:

Mittel (1) zur Bestimmung von Wahrscheinlichkeiten $v_{i,j}$ für den korrekten Empfang des Datenpakets in einem Empfänger *i* des Multicast-Übertragungssystems nach genau einer Anzahl *j* von Übertragungen.

**Revendications**

**1.** Procédé pour déterminer un nombre limite supérieur optimisé (nak_Opt) de transmissions pour un paquet de données dans un système de transmissions multidiffusion comportant les étapes suivantes :

• déterminer un nombre moyen (s(nak)) de récepteurs recevant correctement ledit paquet de données pendant un nombre limite supérieur (nak) de transmission pour chaque nombre limite supérieur (nak) de transmissions,
• déterminer un nombre moyen (r(nak)) de transmissions pour recevoir correctement ledit paquet de données par chaque récepteur pour chaque nombre limite supérieur (nak) de transmissions,

• déterminer un quotient $\left(\frac{s(nak)}{r(nak)}\right)$ dudit nombre moyen (s(nak)) de récepteurs et ledit nombre moyen (r(nak))

de transmissions pour chaque nombre limite supérieur (nak) de transmissions et
• déterminer ledit nombre limite supérieur optimisé (nak_Opt) de transmissions comme étant un quotient maximum

$$\left(\arg_{nak}\left\{\frac{s(nak)}{r(nak)}\right\}\right) \text{ desdits quotients } \left(\frac{s(nak)}{r(nak)}\right).$$

**2.** Procédé selon la revendication 1, **caractérisé en ce que**
ledit nombre moyen (s(nak)) de récepteurs est déterminé selon les probabilités $v_{i,j}$ déterminées pour recevoir correctement ledit paquet de données dans un récepteurs i dudit système de transmissions multidiffusion après un nombre exact j de transmissions pour chaque récepteur i et chaque nombre j de transmissions.

**3.** Procédé selon la revendication 2, **caractérisé en ce que**
ledit nombre moyen (r(nak)) de transmissions est déterminé selon lesdites probabilités $v_{i,j}$.

**4.** Procédé selon les revendications 2 ou 3, **caractérisé en ce que**
ladite probabilité $v_{i,j}$ est déterminée en fonction d'une valeur caractérisant la qualité de transmission de canal, de préférence le rapport signal-bruit, et mesurée dans un récepteur i au moment de la j-ème transmission.

**5.** Procédé selon la revendication 4, **caractérisé en ce que**
une valeur caractérisant la qualité de transmission de canal est déterminée au moyen d'un procédé d'échange ou d'émission d'analyse de qualité de liaison ou au moyen d'un programme d'analyse de prédiction et de couverture.

**6.** Appareil pour déterminer un nombre limite supérieur optimisé (nak_Opt) de transmissions pour un paquet de données dans un système de transmissions multidiffusion comportant

• un moyen (2) pour déterminer un nombre moyen (s(nak)) de récepteurs recevant correctement ledit paquet de données pendant un nombre limite supérieur (nak) de transmissions pour chaque nombre limite supérieur (nak) de transmissions,
• un moyen (3) pour déterminer un nombre moyen (r(nak)) de transmissions pour recevoir correctement ledit paquet de données par chaque récepteur pour chaque nombre limite supérieur (nak) de transmissions,

• un moyen (4) pour déterminer un quotient $\frac{s(nak)}{r(nak)}$ dudit nombre moyen (s(nak)) de récepteurs et ledit nombre moyen (r(nak)) de transmissions pour chaque nombre limite supérieur (nak) de transmissions et

• un moyen (5) pour déterminer ledit nombre maximum optimisé (nak$_{Opt}$) de transmissions comme étant un quotient maximum $\left(\arg_{nak}\left\{\frac{s(nak)}{r(nak)}\right\}\right)$ desdits quotients $\frac{s(nak)}{r(nak)}$ .

7. Appareil selon la revendication 6, comportant en outre un moyen (1) pour déterminer les probabilités $v_{i,j}$ pour recevoir correctement ledit paquet de données dans un récepteur i dudit système de transmissions multidiffusion après un nombre exact j de transmissions.

Start

determining probabilities $v_{ij}$ for correctly receiving a data packet
in a receiver i of the multicast transmission system after exact
j transmissions —— S10

determining an average number s(nak) of receivers receiving
correctly a data packet within an upper-limited number nak of
transmissions for each upper-limited number nak of transmissions —— S20

determining an average number r(nak) of transmissions for
correctly receiving a data packet by each receiver for
each upper-limited number nak of transmissions —— S30

determining a quotient $\frac{s(nak)}{r(nak)}$ between an average number
s(nak) of receivers and an average number r(nak) of
transmissions for each upper-limited number nak of transmissions —— S40

determining an optimized upper-limited $nak_{opt}$ of transmissions
being a maximum a quotient $\arg\max\left\{\frac{s(nak)}{r(nak)}\right\}$ of all determined
quotients $\frac{s(nak)}{r(nak)}$ —— S50

Ende

Fig. 1

```
        1                          2                          3
mean for determining      mean for determining      mean for determining
probabilities vᵢⱼ for     an average number         an average number
correctly receiving a data  s(nak) of receivers re-   r(nak) of transmissions
packet in a receiver i of   ceiving correctly a data  for correctly receiving a
a multicast transmission    packet within an upper-   data packet by each
system after exactly        limited number nak of     receiver
j transmissions             transmissions
```

Block 1: mean for determining probabilities $v_{ij}$ for correctly receiving a data packet in a receiver i of a multicast transmission system after exactly j transmissions

Block 2: mean for determining an average number s(nak) of receivers receiving correctly a data packet within an upper-limited number nak of transmissions

Block 3: mean for determining an average number r(nak) of transmissions for correctly receiving a data packet by each receiver

Block 4: mean for determining a quotient $\dfrac{s(nak)}{r(nak)}$ between a average number s(nak) of receivers and an average number r(nak) of transmissions

Block 5: mean for determining an optimized number $nak_{opt}$ of transmissions being a maximum quotient $\arg\max\left\{\dfrac{s(nak)}{r(nak)}\right\}$ of quotients $\dfrac{s(nak)}{r(nak)}$

Fig. 2

Fig. 3

**EP 2 355 393 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1722506 A1
- US 6661998 B1